# EUROPÄISCHE PATENTSCHRIFT

(11) **EP 4 306 916 B1**
(45) Veröffentlichungstag und Bekanntmachung des Hinweises auf die Patenterteilung: **30.07.2025**
(21) Anmeldenummer: 23180719.9
(22) Anmeldetag: 21.06.2023
(51) Int. Cl.: G01G 17/00, G01G 23/00, B65B 3/04, B65B 3/28, G01G 15/00

(54) **VORRICHTUNG UND VERFAHREN ZUM WIEGEN EINZELNER BEHÄLTNISSE, SOWIE EIN SET MIT EINER SOLCHEN VORRICHTUNG**
DEVICE AND METHOD FOR WEIGHING INDIVIDUAL CONTAINERS AND A SET COMPRISING SUCH A DEVICE
DISPOSITIF ET PROCÉDÉ DE PESAGE DE RÉCIPIENTS INDIVIDUELS, AINSI QU'ENSEMBLE COMPRENANT UN TEL DISPOSITIF

(30) Priorität: 11.07.2022 DE 102022117200
(43) Veröffentlichungstag der Anmeldung: 17.01.2024
(73) Patentinhaber: Syntegon Technology GmbH, 71332 Waiblingen (DE)
(72) Erfinder: Krauß, Ulrich, 74532 Ilshofen (DE); Nagler, Stefan, 73485 Unterschneidheim (DE); Ilgenfritz, Markus, 91555 Feuchtwangen (DE); Bertram, Selig, 74564 Crailsheim (DE); Hillenmeyer, Erich, 73479 Ellwangen (DE); Stegmeier, Samuel, 74594 Kreßberg (DE)
(74) Vertreter: Novagraaf Group

(56) Entgegenhaltungen:
- DE-A1- 102017 207 307

## Beschreibung

Die Erfindung betrifft eine Vorrichtung zum Wiegen von einzelnen in einem Nest angeordneten, insbesondere pharmazeutischen, Behältnissen mit Merkmalen des Anspruchs 1, ein Set mit Merkmalen des Anspruchs 8 und ein Verfahren zum Wiegen von einzelnen in einem Nest angeordneten, insbesondere pharmazeutischen, Behältnissen mit Merkmalen des Anspruchs 9.

Pharmazeutische Behältnisse, wie bspw. Vials oder Spritzen, werden oftmals in einem Nest, bspw. für Transportzwecke, angeordnet. Zur Überprüfung der richtigen Füllmenge der Behältnisse werden diese gewogen. Die Behältnisse können hierfür bspw. einzeln aus dem Nest herausgenommen und an einer Wiegestation gewogen werden. Alternativ kann das Wiegen direkt im Nest geschehen.

DE 10 2016 207 600 A1 offenbart eine Vorrichtung zum Wiegen von Behältnissen, die in einem Nest angeordnet sind.

DE 10 2017 207 307 A1 offenbart eine Vorrichtung zum Wiegen von Behältnissen.

Nachteilig dabei ist, dass durch das Wiegen der Behältnisse direkt im Nest, diese während des Wiegens im Nest verkanten können oder an dem Nest aufliegen können und so das Wiegeergebnis verfälschen können. Dies kann insbesondere bei kleinen Behältnissen aufgrund ihres sehr geringen Gewichts zu kritischen Wiegefehlern führen.

Es ist daher Aufgabe der vorliegenden Erfindung eine Vorrichtung und ein Verfahren zum Wiegen von einzelnen in einem Nest angeordneten, insbesondere pharmazeutischen, Behältnissen und ein Set mit einer solchen Vorrichtung bereitzustellen, wobei die obigen Nachteile ausgeräumt werden.

Diese Aufgabe wird durch eine Vorrichtung zum Wiegen von einzelnen, in einem Nest angeordneten, Behältnissen mit den Merkmalen des Anspruchs 1 gelöst. Bei den Behältnissen kann es sich um pharmazeutische Behältnisse, wie bspw. Fläschchen, Vials, Spritzen, Karpulen, Packmittel, etc. handeln. Die Behältnisse weisen einen Bodenbereich und einen Deckelbereich auf. Die Behältnisse sind insbesondere länglich ausgebildet. Die Behältnisse können ein oberes Ende (Deckelbereich) und ein unteres Ende (Bodenbereich) aufweisen. Die Behältnisse können als Spritzen mit einem Nadelschutz ausgebildet sein. Dabei kann das untere, in Schwerkraftrichtung zeigende, Ende des Nadelschutzes den Bodenbereich darstellen. Ebenso ist es denkbar, insbesondere bei relativ großen Spritzen, dass der an den Nadelschutz angrenzende Bereich der Spritze den Bodenbereich darstellen kann.

Die Vorrichtung umfasst mindestens eine Wiegeeinrichtung zum Wiegen der Behältnisse. Die Wiegeeinrichtung weist mindestens eine Wägezelle zum Wiegen der Behältnisse und mindestens eine Wiegeaufnahme zum Aufnehmen des Bodenbereichs eines der Behältnisse auf.

Die Wiegeeinrichtung kann mehrere Wägezellen aufweisen. Jede Wägezelle kann mehrere Wiegeaufnahmen aufweisen. So können bspw. mehrere Behältnisse gleichzeitig mittels einer Wägezelle mit mehreren Wiegeaufnahmen gewogen werden. Ebenso denkbar ist, dass jeweils nur ein Behältnis mittels der Wägezelle gewogen werden kann.

Die Wiegeaufnahme kann stempelförmig (länglich) ausgebildet sein. Die Wiegeaufnahme kann in Form eines Wiegestempels ausgebildet sein. Die Wiegeaufnahme kann oberhalb (in Bezug auf die Schwerkraftrichtung) der Wägezelle angeordnet und mit dieser mechanisch gekoppelt sein.

Die Vorrichtung umfasst weiter eine Anordnungseinheit. Die Anordnungseinheit ist eingerichtet, um das Nest in der Vorrichtung für den Wiegevorgang anzuordnen. Die Anordnungseinheit kann bspw. als Handhabungseinrichtung oder Roboter bzw. Roboterarm eingerichtet sein.

Die Vorrichtung ist derart eingerichtet, dass die Wiegeaufnahme und die Anordnungseinheit relativ zueinander beweglich eingerichtet sind, um ein Behältnis, das in dem Nest angeordnet ist, welches in der Anordnungseinheit angeordnet ist, aus dem Nest vollständig herausbewegen zu können.

Vorliegend ist mit "vollständig herausbewegen" gemeint, dass zwischen dem zu wiegenden Behältnis und dem Nest insbesondere entlang der Schwerkraftrichtung ein Abstand entsteht. Insbesondere ist das zu wiegende Behältnis über (in Bezug auf die Schwerkraftrichtung) dem Nest angeordnet.

Hierdurch können die Behältnisse jeweils aus dem Nest vollständig angehoben werden. Dadurch wird ein Verkannten, Verkippen und/oder Anliegen des Behältnisses in oder an dem Nest verhindert. Die Genauigkeit beim Wiegen wird dadurch erhöht. Es wird insbesondere ein undefiniertes Anliegen des zu wiegenden Behältnisses im Nest während des Wiegevorgangs vermieden.

Die Vorrichtung weist weiter mindestens eine Zentriereinrichtung zum Zentrieren des mittels der Wiegeeinrichtung zu wiegenden Behältnisses auf. Die Zentriereinrichtung ist insbesondere eingerichtet, um das mittels der Wiegeeinrichtung zu wiegende Behältnis in Bezug auf die Wiegeaufnahme zu zentrieren. Die Zentriereinrichtung kann eingerichtet sein, um das mittels der Wiegeeinrichtung zu wiegende Behältnis in Bezug auf dessen Bodenbereich zu zentrieren. Die Zentriereinrichtung kann eingerichtet sein, um eine Zentrierung zwischen dem Deckelbereich und dem Bodenbereich des mittels der Wiegeeinrichtung zu wiegenden Behältnisses durchzuführen. Die Zentriereinrichtung weist eine Zentrieraufnahme zum Aufnehmen des Deckelbereichs des mittels der Wiegeeinrichtung zu wiegenden Behältnisses auf.

Die Zentrieraufnahme kann eine Kontaktfläche zur, insbesondere (voll-)umfänglichen, Kontaktierung des zu zentrierenden Behältnisses (bzw. dessen Deckelbereichs) aufweisen. Die Zentrieraufnahme und die Wiegeaufnahme können vor und/oder während des Wiegens fluchtend zueinander angeordnet sein. Die Zentrieraufnahme kann in Bezug auf die Schwerkraftrichtung oberhalb der Wiegeaufnahme und oberhalb des Nestes bzw. des zu wiegenden Behältnisses angeordnet sein. Die Zentrieraufnahme kann derart eingerichtet sein, dass der Deckelbereich eines Behältnisses gleichmäßig, insbesondere entlang seines Umfangs, in oder an der Zentrieraufnahme (bzw. an der Kontaktfläche) anliegt.

Hierdurch können die Behältnisse jeweils aus dem Nest vollständig angehoben und, insbesondere in Bezug auf die jeweilige Wiegeaufnahme, zentriert werden.

Der Abstand zwischen der Wiegeeinrichtung, insbesondere der Wiegeaufnahme, und der Zentriereinrichtung, insbesondere der Zentrieraufnahme, kann veränderbar sein.

Die Anordnungseinheit ist eingerichtet, um das Nest für den Wiegevorgang zwischen der Wiegeeinrichtung und der Zentriereinrichtung, insbesondere zwischen der Wiegeaufnahme und der Zentrieraufnahme, zu platzieren.

Die Anordnungseinheit, die Wiegeaufnahme und/oder die Zentrieraufnahme sind entlang der Schwerkraftrichtung beweglich ausgebildet. Hierbei ist die Relativ-Beweglichkeit zwischen den einzelnen Elementen gemeint. So können bspw. die Anordnungseinheit und die Wiegeaufnahme entlang der Schwerkraftrichtung beweglich und die Zentrieraufnahme entlang der Schwerkraftrichtung fest (unbeweglich) ausgebildet sein. Es ist denkbar, dass die Wiegeaufnahme entlang der Schwerkraftrichtung fest (unbeweglich) und die Anordnungseinheit und die Zentrieraufnahme entlang der Schwerkraftrichtung beweglich ausgebildet sein können. Ebenso denkbar ist es, dass die Anordnungseinheit entlang der Schwerkraftrichtung fest (unbeweglich) und die Wiegeaufnahme und die Zentrieraufnahme entlang der Schwerkraftrichtung beweglich ausgebildet sein können.

Die Anordnungseinheit, die Wiegeaufnahme und/oder die Zentrieraufnahme können entlang einer zur Schwerkraftrichtung senkrecht orientierten Bewegungsrichtung (horizontal, waagerecht) beweglich ausgebildet sein.

Durch die oben beschriebenen Relativbewegungen kann der Bodenbereich eines Behältnisses in der Wiegeaufnahme bzw. der Deckelbereich eines Behältnisses in der Zentrieraufnahme aufgenommen (positioniert) werden.

Gemäß einer Weiterbildung können die Wiegeaufnahme und/oder die Zentrieraufnahme wechselbar ausgebildet sein. Die Wiegeaufnahme und/oder die Zentrieraufnahme können insbesondere werkzeuglos wechselbar ausgebildet sein. Hierdurch kann durch ein Austauschen der Wiegeaufnahme und/oder der Zentrieraufnahme bspw. eine Anpassung an verschiedene Größen und Formate von Behältnissen umgesetzt werden.

Gemäß einer Weiterbildung kann die Vorrichtung eine Handhabungseinrichtung zum Wechseln der Wiegeaufnahme und/oder der Zentrieraufnahme aufweisen. Die Handhabungseinrichtung kann in Form eines Roboters bzw. Roboterarmes ausgebildet sein. Hierdurch kann ein automatisiertes Wechseln der Wiegeaufnahme und/oder die Zentrieraufnahme umgesetzt werden. Es ist ebenso denkbar, dass die Anordnungseinheit zum Wechseln der Wiegeaufnahme und/oder der Zentrieraufnahme eingerichtet ist.

Die Handhabungseinrichtung kann als Greifeinrichtung oder als Roboter mit einem Greifer ausgebildet sein (siehe unten), um ein Behältnis nach dem Wiegen aus der Wiegeeinrichtung, insbesondere aus der Wiegeaufnahme, zu entfernen.

Gemäß einer Weiterbildung kann die Zentrieraufnahme mindestens einen Steg, insbesondere vier Stege, zum Aufbringen (Ausüben) einer Kraft auf das zu wiegende Behältnis, insbesondere in Schwerkraftrichtung aufweisen, um das Behältnis in das Nest zurückzuführen. Damit kann eine Rückführung des Behältnisses in ein Nest, bei welchem die Behältnisse durch bspw. federnde Clips (bspw. Nasen) oder andere Rückhalteelemente bspw. am Deckelbereich (bzw. Hals oder Halsbereich) der Behältnisse gehalten werden, ermöglicht oder zumindest erleichtert werden.

Gemäß einer Weiterbildung kann die Zentrieraufnahme als Zentrierring ausgebildet sein. Hierdurch können runde Behältnissen (bzw. Behältnisse mit einem runden Deckelbereich) optimal mittels der als Zentrierring ausgebildeten Zentrieraufnahme aufgenommen bzw. zentriert werden. Es ist ebenso denkbar, dass die Zentrieraufnahme eine eckige (dreieckige, viereckige, vieleckige) oder zumindest teilweise abgerundete (halbkreisförmige, elliptische) Form aufweisen kann. Damit können verschieden geformte Behältnisse optimal mittels der Zentrieraufnahme aufgenommen bzw. zentriert werden.

Gemäß einer Weiterbildung kann die Vorrichtung eine Greifeinrichtung aufweisen. Die Greifeinrichtung kann eingerichtet sein, um ein Behältnis nach dem Wiegen aus der Wiegeeinrichtung zu entfernen. Die Greifeinrichtung kann eingerichtet sein, um ein Behältnis aus der Wiegeaufnahme zu entfernen. Das Entfernen des Behältnisses kann mechanisch oder mittels Unterdruck bzw. Vakuum umgesetzt werden. Die Greifeinrichtung kann als eine separate Handhabungseinrichtung gemäß obiger Ausführungen ausgebildet sein. Mit anderen Worten, die Greifeinrichtung kann zur Handhabung (Wechsel, Entfernen) der Wiegeaufnahme, der Zentrieraufnahme und/oder eines, insbesondere gewogenen, Behältnisses ausgebildet sein. So können Ausschuss Behältnisse direkt nach dem Wiegen entfernt werden, so dass diese nicht wieder ins Nest zurückgeführt werden.

Gemäß einer Weiterbildung kann die Vorrichtung eine Füll- und/oder Verschließeinrichtung aufweisen. Die Füll- und/oder Verschließeinrichtung kann eingerichtet sein, um ein Behältnis, dessen Bodenbereich in der Wiegeaufnahme aufgenommen ist, zu befüllen und/oder zu verschließen. Hierdurch ist eine Befüllung und/oder ein Verschließen der Behältnisse direkt innerhalb des Nestes (bzw. am Nest) möglich. So kann bspw. der Füllvorgang mittels der Wiegeeinrichtung kontrolliert und/oder durch die Wiegeeinrichtung gesteuert werden.

Alternativ oder zusätzlich kann die Füll- und/oder Verschließeinrichtung eingerichtet sein, um ein Behältnis, dessen Deckelbereich in der Zentrieraufnahme aufgenommen ist, zu befüllen und/oder zu verschließen. Hierdurch ist ein besonders genaues Befüllen und/oder Verschließen des Behältnisses möglich, da die Zentrieraufnahme eine exakte Ausrichtung des Deckelbereichs eines Behältnisses ermöglicht.

Die Vorrichtung kann eine Aushebeeinheit aufweisen. Die Aushebeeinheit kann zum mechanischen entkoppeln der Wiegeaufnahme und der Wägezelle eingerichtet sein. Mit anderen Worten, mittels der Aushebeeinheit kann die Wiegeaufnahme von der Wägezelle, insbesondere mechanisch, entkoppelt (angehoben) werden. Die Aushebeeinheit kann zwischen der Wägezelle und der Wiegeaufnahme angeordnet sein. Die Aushebeeinheit kann eingerichtet sein, um die Wiegeaufnahme (in Bezug auf die Schwerkraftrichtung) anzuheben, so dass zwischen der Wiegeaufnahme und der Wägezelle ein Abstand entsteht. Die Aushebeeinheit kann eingerichtet sein, um die Wiegeaufnahme (in Bezug auf die Schwerkraftrichtung) abzusenken, so dass kein Abstand zwischen der Wiegeaufnahme und der Wägezelle entsteht, insbesondere, dass die Wägezelle und die Wiegeaufnahme in Kontakt miteinander angeordnet sind. Die Aushebeeinheit kann als Teil der Wiegeeinrichtung ausgebildet sein. Die Aushebeeinheit kann entlang der Schwerkraftrichtung bewegbar ausgebildet sein. Die Aushebeeinheit kann mit der Wiegeaufnahme mechanisch gekoppelt sein.

Die Aushebeeinheit kann bspw. dann zum Einsatz kommen, wenn Behältnisse, insbesondere in Form von Vials, in sogenannten Clip-Nestern über federnde Halteclips zwischen einem Rumpf und einem Hals der Behältnisse gehalten werden und aktiv gegen die federnden Halteclips nach oben aus dem Nest gedrückt werden müssen.

Durch die Aushebeeinheit kann die mechanische Kopplung zwischen der Wiegeaufnahme und der Wägezelle aufgehoben werden, so dass die auf die Wiegeaufnahme wirkenden Kräfte nicht auf die Wägezelle übertragen werden, was im Falle einer zu hohen Last zu einer Überlastung und somit zu einer Beschädigung der Wägezelle führen könnte. Zum Wiegen des Behältnisses kann die mechanische Kopplung zwischen der Wiederaufnahme und der Wägezelle wiederhergestellt werden, so dass die während des Wiegevorgangs auf die Wiegeaufnahme wirkende Gewichtskraft des zu wiegenden Behältnisses auf die Wägezelle einwirken (übertragen) werden kann und das Behältnis mittels der Wägezelle gewogen werden kann.

Die obige Aufgabe wird weiter durch ein Set mit den Merkmalen des Anspruchs 8 gelöst. Das Set umfasst eine Vorrichtung gemäß obiger Ausführungen, mindestens ein Nest und mindestens ein in dem Nest angeordnetes, insbesondere pharmazeutisches, Behältnis. Bei dem Behältnis kann es sich um ein Behältnis gemäß obiger Ausführungen handeln.

Hinsichtlich der mit dem Set erzielbaren Vorteile wird auf die diesbezüglichen Ausführungen zur Vorrichtung verwiesen. Zur weiteren Ausgestaltung des Sets können die im Zusammenhang mit der Vorrichtung beschriebenen und/oder die nachfolgend noch erläuterten Maßnahmen dienen.

Die obige Aufgabe wird weiter durch ein Verfahren zum Wiegen von einzelnen, in einem Nest angeordneten, Behältnissen mit den Merkmalen des Anspruchs 9 gelöst. Bei den Behältnissen kann es sich um pharmazeutische Behältnisse, wie bspw. Fläschchen, Vials, Spritzen, Karpulen, Packmittel, etc. handeln. Die Behältnisse weisen einen Bodenbereich und eine Deckelbereich auf. Die Behältnisse sind insbesondere länglich ausgebildet. Die Behältnisse können ein oberes Ende (Deckelbereich) und ein unteres Ende (Bodenbereich) aufweisen. Die Behältnisse können als Spritzen mit einem Nadelschutz ausgebildet sein. Dabei kann das untere, in Schwerkraftrichtung zeigende, Ende des Nadelschutzes den Bodenbereich darstellen. Ebenso ist es denkbar, insbesondere bei relativ großen Spritzen, dass der an den Nadelschutz angrenzende Bereich der Spritze den Bodenbereich darstellen kann.

Das Verfahren umfasst die Schritte:
Bereitstellen eines Nestes mit mindestens einem darin angeordneten Behältnis.

Aufnehmen des Bodenbereichs eines zu wiegenden Behältnisses in einer Wiegeaufnahme einer Wiegeeinrichtung, um dieses mittels der Wiegeeinrichtung zu wiegen.

Vollständiges Herausheben des zu wiegenden Behältnisses aus dem Nest, indem die Wiegeaufnahme und/oder das Nest entlang der Schwerkraftrichtung relativ zueinander bewegt werden. Dabei kann ein erstes dieser zwei Elemente (Nest oder Wiegeaufnahme) fest (unbeweglich) gehalten und das andere, zweite, Element (relativ zum ersten Element) bewegt werden. Die bewegten Elemente können kontinuierlich oder schrittweise bewegt werden.

Wiegen des aus dem Nest vollständig herausgehobenen Behältnisses mittels der Wiegeeinrichtung.

Aufnehmen des Deckelbereichs des zu wiegenden Behältnisses in einer Zentrieraufnahme, um dieses, insbesondere in Bezug auf die Wiegeaufnahme, zu zentrieren.

Dabei kann das vollständige Herausheben des zu wiegenden Behältnisses aus dem Nest umgesetzt werden, indem die Wiegeaufnahme, die Zentrieraufnahme und/oder das Nest entlang der Schwerkraftrichtung relativ zueinander bewegt werden. Dabei kann eines dieser drei Elemente (Nest, Wiegeaufnahme oder Zentrieraufnahme) fest (unbeweglich) gehalten und die zwei anderen Elemente (relativ zueinander) bewegt werden. Die bewegten Elemente können kontinuierlich oder schrittweise bewegt werden.

Es ist denkbar, dass zunächst das zu wiegende Behältnis vollständig aus dem Nest herausgehoben wird, dann dessen Deckelbereich in der Zentrieraufnahme aufgenommen wird und anschließend das herausgehobene Behältnis gewogen wird.

Es ist ebenso denkbar, dass das zu wiegende Behältnis zunächst teilweise herausgehoben wird, dann dessen Deckelbereich in der Zentrieraufnahme aufgenommen wird, dann das Behältnis vollständig herausgehoben wird und anschließend das herausgehobene Behältnis gewogen wird. Dabei kann nach dem Aufnehmen des Deckelbereichs eines zu wiegenden Behältnisses in der Zentrieraufnahme, die Bewegung der Zentrieraufnahme an die Bewegung der Wiegeaufnahme gekoppelt sein. Mit anderen Worten, die Zentrieraufnahme und die Wiegeaufnahme können nach dem Aufnehmen des Deckelbereichs eines zu wiegenden Behältnisses in der Zentrieraufnahme die gleiche Bewegung durchführen.

Das Verfahren kann weiter den Schritt umfassen:
Aufbringen (Ausüben) einer Kraft, insbesondere in Schwerkraftrichtung, auf das gewogene Behältnis, um dieses wieder in das Nest zurückzuführen.

Das Verfahren kann die Schritte umfassen:
Ermitteln nach dem Wiegen eines Behältnisses, ob es sich bei dem gewogenen Behältnis um ein Ausschuss Behältnis handelt.

Entfernen des als Ausschuss Behältnis identifizierten Behältnisses aus der Wiegeaufnahme, so dass ein als Ausschuss Behältnis identifiziertes Behältnis nicht wieder in das Nest zurückgeführt wird.

Das Verfahren kann weiter den Schritt umfassen:
Befüllen und/oder Verschließen eines Behältnisses, dessen Bodenbereich in der Wiegeaufnahme aufgenommen ist.

Alternatives oder zusätzliches Befüllen und/oder Verschließen eines Behältnisses, dessen Deckelbereich in der Zentrieraufnahme aufgenommen ist.

Zur Durchführung des Verfahrens kann eine Vorrichtung gemäß obiger Ausführungen oder ein Set gemäß obiger Ausführungen verwendet werden.

Hinsichtlich der mit dem Verfahren erzielbaren Vorteile wird auf die diesbezüglichen Ausführungen zur Vorrichtung bzw. zum Set verwiesen. Zur weiteren Ausgestaltung des Verfahrens können die im Zusammenhang mit der Vorrichtung bzw. mit dem Set beschriebenen und/oder die nachfolgend noch erläuterten Maßnahmen dienen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Darstellung der erfindungsgemäßen Vorrichtung in einem ersten Zustand;
- Fig. 2: eine perspektivische Darstellung der Vorrichtung gemäß Figur 1 in einem zweiten Zustand;
- Fig. 3: eine perspektivische Darstellung der Vorrichtung gemäß Figur 1 in einem dritten Zustand;
- Fig. 4: eine perspektivische Darstellung der Vorrichtung gemäß Figur 1 in einem vierten Zustand;
- Fig. 5: eine perspektivische Darstellung der Vorrichtung gemäß einem zweiten Ausführungsbeispiel und
- Fig. 6: einen Ausschnitt einer Wiegeeinrichtung und einer Zentriereinrichtung der Vorrichtung gemäß einem dritten Ausführungsbeispiel.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

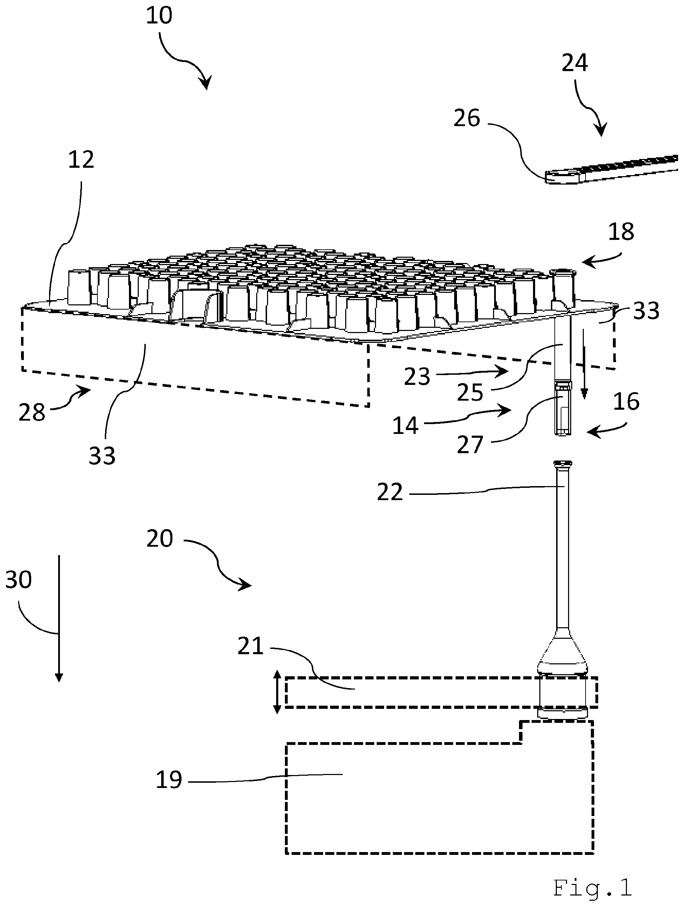

Figur 1 zeigt eine perspektivische Darstellung der erfindungsgemäßen Vorrichtung 10 in einem ersten Zustand. Die Vorrichtung 10 ist zum Wiegen von einzelnen Behältnissen 14 ausgebildet. Die Behältnisse 14 sind in einem Nest 12 angeordnet. Die Behältnisse 14 sind länglich ausgebildet und weisen einen Bodenbereich 16 (unteres Ende des Behältnisses 14) und einem Deckelbereich 18 (oberes Ende des Behältnisses 14). Der besseren Übersicht wegen ist lediglich ein Behältnis 14 in dem Nest 12 dargestellt.

Bei dem in den Figuren 1 bis 5 dargestellten Behältnis 14 handelt es sich um eine Spritze 23 mit einem Zylinder 25 (welcher mit bspw. einem flüssigen Medikament gefüllt werden kann) und einem Nadelschutz 27, der eine an dem Zylinder 25 angeordnete Nadel (nicht dargestellt) umschließt. Dabei ist mit dem Bodenbereichs 16 der dargestellten Spritze 23 das untere Ende des Nadelschutzes 27 gemeint. Die Spritze 23 kann mit einem Kolben (nicht dargestellt) verschlossen werden. Mittels des Kolbens kann der Inhalt (bspw. flüssiges Medikament) aus dem Zylinder 25 durch die Nadel aus der Spritze herausgedrückt werden.

Die Vorrichtung 10 umfasst eine Wiegeeinrichtung 20 zum Wiegen der Behältnisse 14 auf. Die Wiegeeinrichtung 20 weist eine Wiegeaufnahme 22 auf. Die Wiegeaufnahme 22 ist vorliegend in Form eines Wiegestempels ausgebildet. Die Wiegeaufnahme 22 ist eingerichtet, um den Bodenbereich 16 eines Behältnisses 14 aufzunehmen. Mit anderen Worten, die Wiegeaufnahme 22 kann ein Behältnis 14 an dessen Bodenbereich 16 aufnehmen.

Die Wiegeeinrichtung 20 weist weiter eine Wägezelle 19 auf. Die Wiegeaufnahme 22 ist oberhalb (in Bezug auf die Schwerkraftrichtung 30) der Wägezelle 19 angeordnet und mit dieser mechanisch gekoppelt. Der auf die Wiegeaufnahme 22 ausgeübte Gewichtskraft durch das Aufnehmen des Behältnisses kann so auf die Wägezelle 19 (mechanisch) übertragen und mittels der Wägezelle 19 ermittelt werden. Mit anderen Worten, das in der Wiegeaufnahme 22 aufgenommene Behältnis wird mittels der Wägezelle 19 gewogen.

Vorliegend weist die Wiegeeinrichtung 21 eine Aushebeeinheit 21 auf. Die Aushebeeinheit 21 ist entlang der Schwerkraftrichtung 30 beweglich ausgebildet. Dies ist den Figuren 1 bis 5 mittels eines Doppelpfeils angedeutet. Die Aushebeeinheit 21 ist vorliegend mit der Wiegeaufnahme 22 derart gekoppelt, dass eine Bewegung der Aushebeeinheit 21 entlang der Schwerkraftrichtung 30 eine Bewegung der Wiegeaufnahme 22 bewirkt. Mit anderen Worten, mittels der Aushebeeinheit 21 kann die Wiegeaufnahme 22 relativ zur Wägezelle 19 entlang der Schwerkraftrichtung 30 bewegt werden und damit mit der Wägezelle 19 gekoppelt bzw. von der Wägezelle 19 entkoppelt werden.

So kann die Wiegeaufnahme 22 mittels der Aushebeeinheit 21 in Figur 1 nach oben bewegt (angehoben) werden und dadurch von der Wägezelle 19 entkoppelt werden. Dann werden die auf die Wiegeaufnahme 22 wirkenden Kräfte (bspw. während des Heraushebens des Behältnisses 14) nicht auf die Wägezelle 19 übertragen. Für den Wiegevorgang kann die Wiegeaufnahme 22 mittels der Aushebeeinheit 21 in Figur 1 nach unten bewegt (abgesenkt) werden und dadurch mit der Wägezelle 19 mechanisch gekoppelt werden, so dass das herausgehobene, in der Wiegeaufnahme 22 aufgenommene, Behältnis 14 mittels der Wägezelle 19 gewogen werden kann.

Die Vorrichtung 10 umfasst weiter eine Zentriereinrichtung 24 zum Zentrieren des in der Wiegeaufnahme 22 der Wiegeeinrichtung 20 aufgenommenen Behältnisses 14. Die Zentriereinrichtung 24 weist hierzu eine Zentrieraufnahme 26 auf. Die Zentrieraufnahme 26 ist eingerichtet, um den Deckelbereich 18 eines Behältnisses 14 aufzunehmen. Mit anderen Worten, die Zentriereinrichtung 24 kann ein Behältnis 14 an dessen Deckelbereich 18, insbesondere in Bezug auf die Wiegeaufnahme 22, zentrieren. Die Zentrieraufnahme 26 ist vorliegend als Zentrierring ausgebildet.

Vorliegend ist bei der in den Figuren 1 bis 5 dargestellten Spritze 23 mit dem Deckelbereich 18 das obere Ende (in Bezug auf die Schwerkraftrichtung 30) des Zylinders 25 gemeint.

Die Vorrichtung 10 umfasst weiter eine Anordnungseinheit 28. Die Anordnungseinheit 28 ist in den Figuren 1 bis 5 lediglich schematisch mittels zweier Klemmbacken 33, die das Nest 12 an zwei gegenüberliegenden Seiten klemmend fixieren, angedeutet. Die Anordnungseinheit 28 ist ausgebildet, um das Nest 12 für den Wiegevorgang in der Vorrichtung 10 zu platzieren. Die Anordnungseinheit 28 positioniert das Nest 12 hierzu zwischen der Wiegeeinrichtung 20 (bzw. der Wiegeaufnahme 22) und der Zentriereinrichtung 24 (bzw. der Zentrieraufnahme 26).

Die Zentriereinrichtung 24 ist in Bezug auf die Schwerkraftrichtung 30, die in sämtlichen den Figuren in Form eines Pfeiles angedeutet ist, oberhalb der Wiegeeinrichtung 20 angeordnet. Vorliegend ist die Zentriereinrichtung 24 derart über der Wiegeeinrichtung 20 angeordnet, sodass die Zentrieraufnahme 26 und die Wiegeaufnahme 20 fluchtend zueinander angeordnet sind.

Vorliegend ist die Wiegeeinrichtung 20 entlang der Schwerkraftrichtung 30 unbeweglich ausgebildet. Die Zentriereinrichtung 24 (und damit die Zentrieraufnahme 26) und die Anordnungseinheit 28 (und damit das Nest 12) sind vorliegend entlang der Schwerkraftrichtung 30 jeweils beweglich ausgebildet. Die Anordnungseinheit 28 ist zudem entlang einer senkrecht zur Schwerkraftrichtung 30 orientierten Richtung (horizontal, waagerecht) beweglich ausgebildet. Damit ist die Anordnungseinheit 28 in alle 3 Raumrichtungen beweglich ausgebildet.

Die Figuren 1 bis 4 illustrieren einen Wiegevorgang des dargestellten Behältnisses 14 mittels der Vorrichtung 10.

Zunächst wird das Nest 12 mittels der Anordnungseinrichtung 28 zwischen die Wiegeeinrichtung 20 und die Zentriereinrichtung 24 positioniert. Dabei werden das Nest 12 (bzw. die Anordnungseinrichtung 28), die Zentriereinrichtung 24 und/oder die Wiegeeinrichtung 20 entlang einer senkrecht zur Schwerkraftrichtung 30 orientierten Richtung derart bewegt, dass das zu wiegende (dargestellte) Behältnis 14 mit seinem Bodenbereich 16 direkt über der Wiegeaufnahme 22 der Wiegeeinrichtung 20 und die Zentrieraufnahme 26 der Zentriereinrichtung 24 direkt oberhalb des Deckelbereichs 18 des zu wiegenden (dargestellten) Behältnisses 14 angeordnet ist. Die Vorrichtung 10 befindet sich dann im ersten (Figur 1) Zustand.

Dabei ist die Bewegung des Nestes 12 (bzw. der Anordnungseinrichtung 28), der Zentriereinrichtung 24 (bzw. der Zentrieraufnahme 26) und/oder der Wiegeeinrichtung 20 (bzw. der Wiegeaufnahme 22) entlang einer senkrecht zur Schwerkraftrichtung 30 orientierten Richtung als eine Relativbewegung zu verstehen. D.h. es können ein, zwei oder alle drei Elemente (Anordnungseinrichtung 28, Wiegeeinrichtung 20, Zentriereinrichtung 24) bewegt werden. Dabei kann die Bewegung dieser Elemente kontinuierlich oder schrittweise umgesetzt werden.

Aus dem in Figur 1 dargestellten ersten Zustand der Vorrichtung 10 wird das Nest 12 mittels der Anordnungseinrichtung 28 in Schwerkraftrichtung 30 (in Figur 1 nach unten) bewegt. Dies ist in Figur 1 mittels eines Pfeils angedeutet. Damit wird das in dem Nest 12 aufgenommene Behältnis 14 auf die Wiegeaufnahme 22 der Wiegeeinrichtung 20 zu bewegt.

Das Nest 12 wird in Schwerkraftrichtung 30 bewegt, bis das Behältnis 14 mit dessen Bodenbereich 16 die Wiegeaufnahme 22 kontaktiert bzw. in der Wiegeaufnahme 22 der Wiegeeinrichtung 20 aufgenommen ist. Das Nest 12 wird anschließend weiter in Schwerkraftrichtung 30 bewegt, bis das Behältnis 14 teilweise (mit seinem Deckelbereich 18) aus dem Nest 12 heraus gehoben ist, so dass die Vorrichtung 10 in einem zweiten Zustand angeordnet ist.

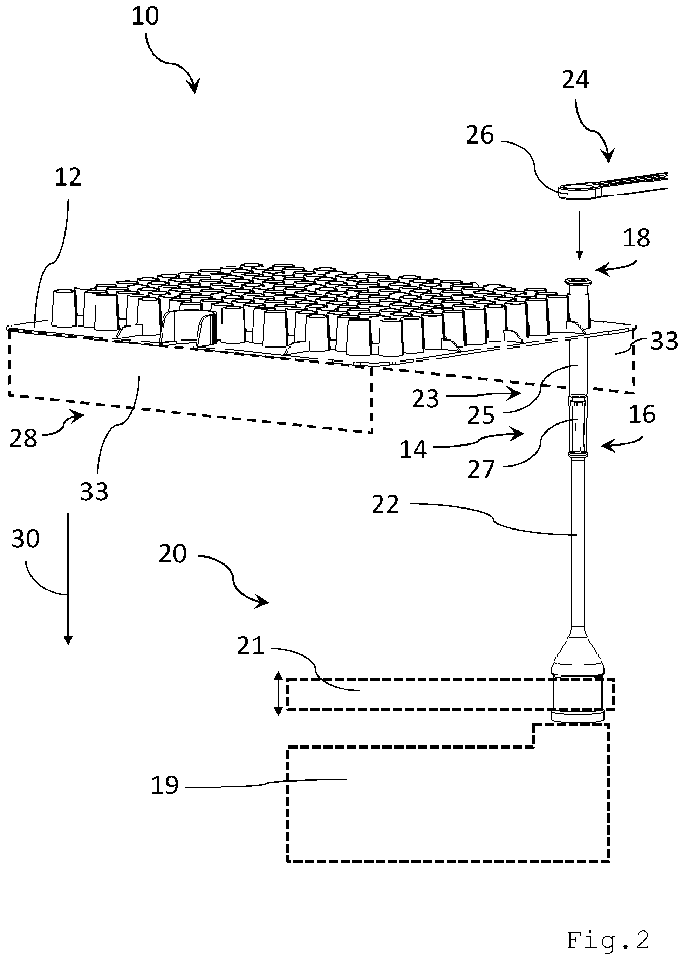

Dieser zweite Zustand der Vorrichtung 10 gemäß Figur 1 ist in Figur 2 dargestellt. Im zweiten Zustand der Vorrichtung 10 ist das Behältnis 14 teilweise (mit seinem Deckelbereich 18) aus dem Nest 12 heraus gehoben. Aus dem zweiten Zustand heraus wird die Zentriereinrichtung 24 und damit die Zentrieraufnahme 26 in Schwerkraftrichtung 30 (in Figur 2 nach unten) auf das Behältnis 14 bzw. dessen Deckelbereich 18 zu bewegt.

Diese Bewegung der Zentriereinrichtung 28 bzw. der Zentrieraufnahme 26 wird solange durchgeführt, bis der Deckelbereich 18 des Behältnisses 14 in der Zentrieraufnahme 26 aufgenommen ist bzw. mittels der Zentrieraufnahme 26 kontaktiert bzw. zentriert wird. Damit befindet sich die Vorrichtung 10 in einem dritten Zustand.

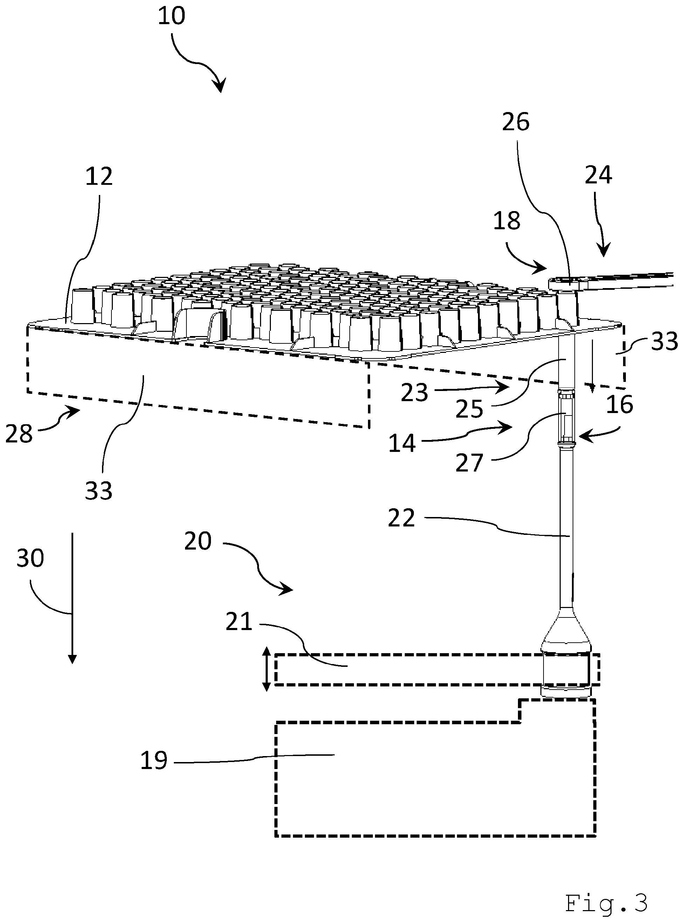

Figur 3 zeigt eine perspektivische Darstellung der Vorrichtung 10 gemäß Figur 1 im dritten Zustand. Im dritten Zustand der Vorrichtung 10 ist das Behältnis 14 mit seinem Bodenbereich 16 in der Wiegeaufnahme 22 und mit seinem Deckelbereich 18 in der Zentrieraufnahme 26 aufgenommen bzw. angeordnet. Aus diesem dritten Zustand heraus wird das Nest 12 weiter in Schwerkraftrichtung 30 (in Figur 3 nach unten) solange bewegt, bis das Behältnis 14 komplett aus dem Nest 12 herausgehoben ist. Damit befindet sich die Vorrichtung in einem vierten Zustand.

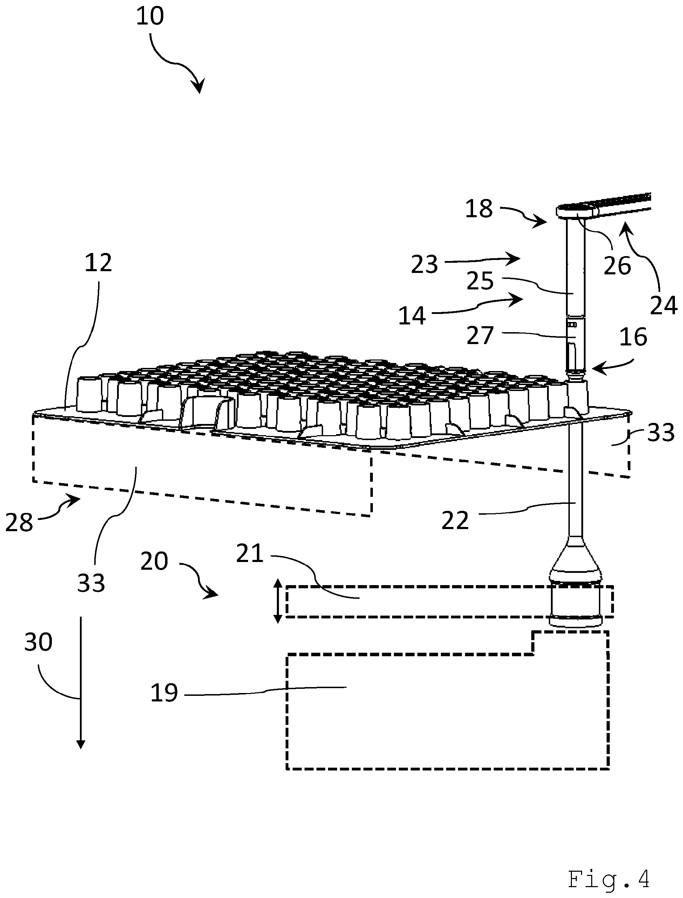

Figur 4 zeigt eine perspektivische Darstellung der Vorrichtung 10 gemäß Figur 1 im vierten Zustand. Im vierten Zustand der Vorrichtung 10 wird vorliegend der Wiegevorgang durchgeführt. Im vierten Zustand der Vorrichtung 10 ist das Behältnis 14 komplett aus dem Nest 12 herausgehoben und kontaktiert das Nest 12 nicht. Das herausgehobene Behältnis 14 wird ausschließlich durch die Wiegeaufnahme 22 und die Zentrieraufnahme 26 kontaktiert bzw. gehalten. Damit können Wiege-Ungenauigkeiten, die bspw. durch ein Verkannten des Behältnisses 14 im Nest 12 und/oder ein undefiniertes Anliegen des Behältnisses 14 im Nest 12 entstehen können, vermieden werden.

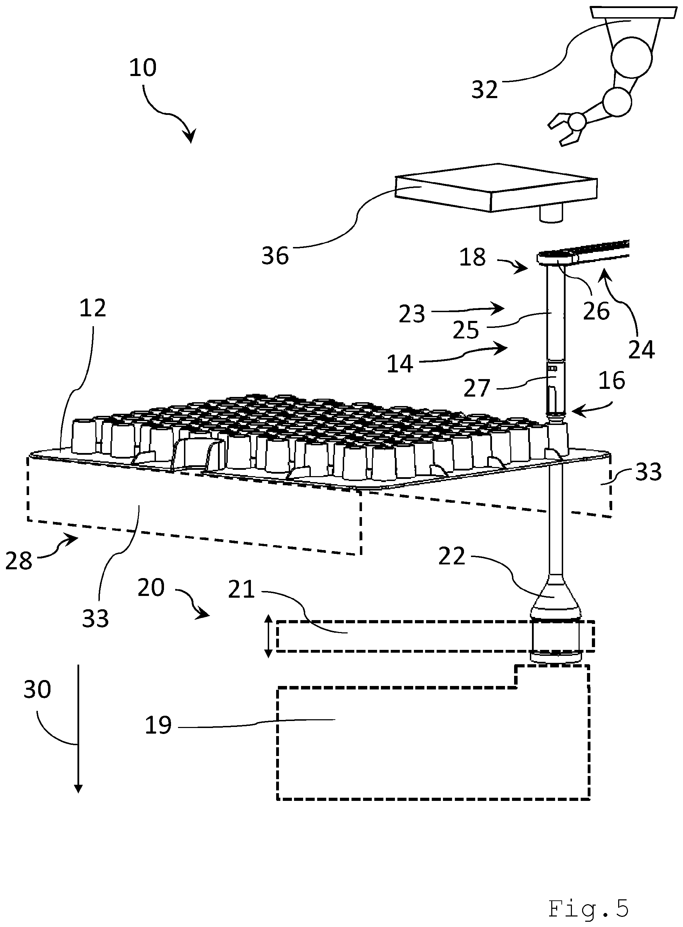

Figur 5 zeigt eine perspektivische Darstellung der Vorrichtung 10 gemäß einem zweiten Ausführungsbeispiel. Das zweite Ausführungsbeispiel der Vorrichtung 10 unterscheidet sich von dem ersten, in den Figuren 1 bis 4 gezeigten, Ausführungsbeispiel durch eine Handhabungseinrichtung 32 und eine Füll- und/oder Verschließeinrichtung 36. Zudem sind die Wiegeaufnahme 22 und die Zentrieraufnahme 26 gemäß dem zweiten Ausführungsbeispiel der Vorrichtung 10 austauschbar (wechselbar) ausgebildet.

Die Handhabungseinrichtung 32 dient dem Wechsel der Wiegeaufnahme 22 und/oder der Zentrieraufnahme 26. Die Handhabungseinrichtung 32 ist vorliegend in Form eines Roboterarmes ausgebildet. Die Handhabungseinrichtung 32 ist in Figur 5 lediglich schematisch angedeutet.

So können mittels der Handhabungseinrichtung 32 die Wiegeaufnahme 22 und/oder die Zentrieraufnahme 26 bspw. gegen eine andere Wiegeaufnahme 22 und/oder eine andere Zentrieraufnahme 26 mit einer anderen Größe und/oder einem anderen Format ausgetauscht werden. So kann die Vorrichtung 10 an verschiedene Größen und/oder Formate von Behältnissen 14 automatisch mittels der Handhabungseinrichtung 32 angepasst werden. Es ist denkbar, dass ein derartiger Wechsel mittels der Anordnungseinheit (die bspw. als Roboterarm ausgebildet sein kann) durchgeführt werden kann.

Die Füll- und/oder Verschließeinrichtung 36 dient dem Befüllen und/oder Verschließen der Behältnisse 14. Die Füll- und/oder Verschließeinrichtung 36 ist in Figur 5 lediglich schematisch angedeutet. Das Behältnis 14 ist während es befüllt und/oder verschlossen wird vorliegend mit seinem Bodenbereich 18 in der Wiegeaufnahme 22 und mit seinem Deckelbereich 18 in der Zentrieraufnahme 26 aufgenommen. So kann der Befüll- und/oder Verschließvorgang mittels der Wiegeeinrichtung 20 (bzw. der Wägezelle 19 der Wiegeeinrichtung 20) kontrolliert bzw. gesteuert werden, wobei das Behältnis 14 durch die Zentriereinrichtung 24 für den Befüll- und/oder Verschließvorgang exakt ausgerichtet ist.

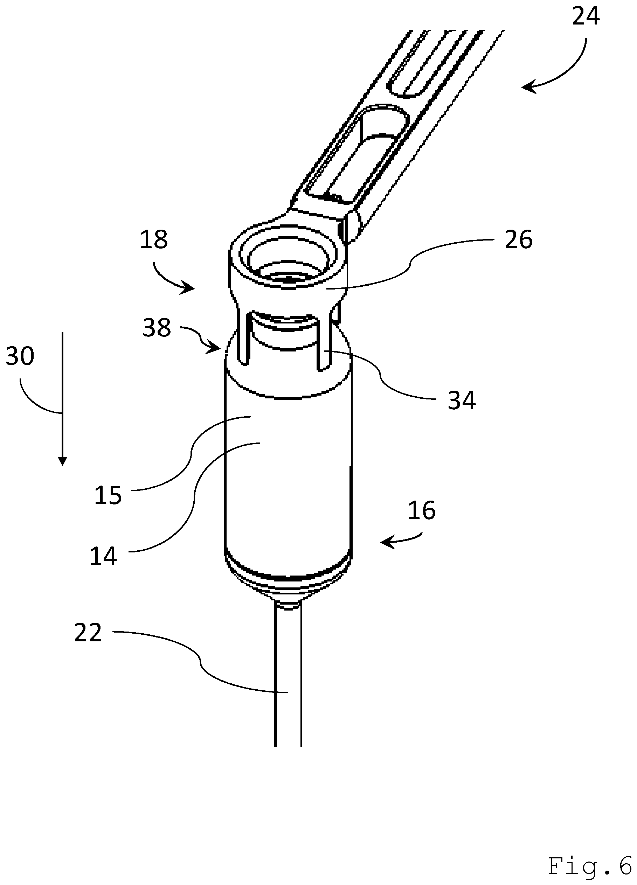

Figur 6 zeigt einen Ausschnitt der Wiegeeinrichtung 20 und der Zentriereinrichtung 24 der Vorrichtung 10 gemäß einem dritten Ausführungsbeispiel. Das dritte Ausführungsbeispiel der Vorrichtung 10 unterscheidet sich von den beiden oben beschriebenen dadurch, dass die Wiegeaufnahme 22 und die Zentrieraufnahme 26 eine andere Größe und Form aufweisen.

Die Wiegeaufnahme 22 und die Zentrieraufnahme 26 sind auf das dargestellte Behältnis 14, das vorliegend in Form eines Fläschchens 15 ausgebildet ist, abgestimmt. Mit anderen Worten, die Wiegeaufnahme 22 und die Zentrieraufnahme 26 weisen eine mit dem Bodenbereich 16 bzw. dem Deckelbereich 18 des Fläschchens 15 korrespondierende Form auf. Das Fläschchen 15 weist einen Halsbereich 38 auf. Der Halsbereich 38 ist unterhalb des Deckelbereichs 18 des Fläschchens 15 angeordnet.

Vorliegend weist die Zentrieraufnahme 26 vier Stege 34 auf. Die Stege 34 erstrecken sich von der Zentrieraufnahme 26 in Richtung des Fläschchens 15 (entlang der Schwerkraftrichtung 30). Die Stege 34 sind (stiftartig) länglich ausgebildet. Die Stege 34 kontaktieren das Fläschchen 15 mit ihren jeweiligen in Schwerkraftrichtung 30 unteren Enden im Halsbereich 38 des Fläschchens 15. Es ist denkbar, dass die Erstreckung der Stege 34 jeweils zur Schwerkraftrichtung geneigt verläuft. Mit anderen Worten, die Stege 34 können auch schräg (in Bezug auf die Schwerkraftrichtung) verlaufen.

Damit kann durch eine Relativbewegung der Zentriereinrichtung 24 bzw. der Zentrieraufnahme 26 in Schwerkraftrichtung 30 eine Kraft erzeugt und über die Stege 34 auf den Halsbereich 38 des Fläschchens 15 übertragen werden. Mit anderen Worten, über die Stege 34 kann eine Kraft auf den Halsbereich 38 des Fläschchen 15 ausgeübt werden, die in Schwerkraftrichtung 30 ausgerichtet ist.

Werden die Fläschchen 15 in dem Nest 12 durch federnde Rückhalteelemente (bspw. federnde Clips oder Nasen) bspw. im Halsbereich 38 der Fläschchen 15 gehalten, so kann durch ein Ausüben einer Kraft über die Stege 34 auf das Fläschchen 15 bzw. deren Halsbereich 38 eine Rückführung des Fläschchens 15 in das Nest 12 ermöglicht oder zumindest erleichtert werden.

## Patentansprüche

1. Vorrichtung (10) zum Wiegen von einzelnen in einem Nest (12) angeordneten, insbesondere pharmazeutischen, Behältnissen (14), wobei die Behältnisse (14) mit einem Bodenbereich (16) und einem Deckelbereich (18) ausgebildet sind und die Vorrichtung (10) umfasst:,
- mindestens eine Wiegeeinrichtung (20), wobei die Wiegeeinrichtung (20) mindestens eine Wägezelle (19) zum Wiegen der Behältnisse (14) und mindestens eine Wiegeaufnahme (22) zum Aufnehmen des Bodenbereichs (16) eines der Behältnisse (14) aufweist,
- eine Anordnungseinheit (28), die eingerichtet ist, um das Nest (12) in der Vorrichtung (10) für den Wiegevorgang anzuordnen,
- wobei die Vorrichtung (10) derart eingerichtet ist, dass die Wiegeaufnahme (22) und die Anordnungseinheit (28) relativ zueinander beweglich eingerichtet sind, um ein Behältnis (14), das in dem Nest (12) angeordnet ist, welches in der Anordnungseinheit (28) angeordnet ist, aus dem Nest (12) vollständig herausbewegen zu können, wobei die Vorrichtung (10) mindestens eine Zentriereinrichtung (24) zum Zentrieren des mittels der Wiegeeinrichtung (20) zu wiegenden Behältnisses (14), insbesondere in Bezug auf die Wiegeaufnahme (22), aufweist, wobei die Zentriereinrichtung (24) eine Zentrieraufnahme (26) zum Aufnehmen des Deckelbereichs (18) des mittels der Wiegeeinrichtung (20) zu wiegenden Behältnisses (14) aufweist, wobei die Anordnungseinheit (28) eingerichtet ist, um das Nest (12) für den Wiegevorgang zwischen der Wiegeeinrichtung (20) und der Zentriereinrichtung (24), insbesondere zwischen der Wiegeaufnahme (22) und der Zentrieraufnahme (26), zu platzieren, wobei die Anordnungseinheit (28), die Wiegeaufnahme (22) und/oder die Zentrieraufnahme (26), entlang der Schwerkraftrichtung (30) beweglich ausgebildet sind.

2. Vorrichtung (10) nach Anspruch 1, **dadurch gekennzeichnet, dass** die Wiegeaufnahme (22) und/oder die Zentrieraufnahme (26), insbesondere werkzeuglos, wechselbar ausgebildet sind.

3. Vorrichtung (10) nach dem voranstehenden Anspruch, **dadurch gekennzeichnet, dass** die Vorrichtung (10) eine Handhabungseinrichtung (32) zum Wechseln der Wiegeaufnahme (22) und/oder der Zentrieraufnahme (26) umfasst.

4. Vorrichtung (10) nach einem der voranstehenden Ansprüche, **dadurch gekennzeichnet, dass** die Zentrieraufnahme (26) mindestens einen Steg (34), insbesondere vier Stege (26), zum Aufbringen einer Kraft auf das zu wiegende Behältnis (14), insbesondere in Schwerkraftrichtung (30), um das Behältnis (14) in das Nest (12) zurückzuführen, aufweist.

5. Vorrichtung (10) nach einem der voranstehenden Ansprüche, **dadurch gekennzeichnet, dass** die Zentrieraufnahme (26) als Zentrierring ausgebildet ist.

6. Vorrichtung (10) nach einem der voranstehenden Ansprüche, **dadurch gekennzeichnet, dass** die Vorrichtung (10) eine Greifeinrichtung aufweist, wobei die Greifeinrichtung eingerichtet ist, um ein Behältnis (14) nach dem Wiegen aus der Wiegeeinrichtung (20), insbesondere aus der Wiegeaufnahme (22), zu entfernen.

7. Vorrichtung (10) nach einem der voranstehenden Ansprüche, **dadurch gekennzeichnet, dass** die Vorrichtung (10) eine Füll- und/oder Verschließeinrichtung (36) umfasst, die eingerichtet ist, um ein Behältnis (14), dessen Bodenbereich (16) in der Wiegeaufnahme (22) aufgenommen ist, zu befüllen und/oder zu verschließen.

8. Set umfassend eine Vorrichtung (10) nach einem der voranstehenden Ansprüche, mindestens ein Nest (12) und mindestens ein in dem Nest (12) angeordnetes, insbesondere pharmazeutisches, Behältnis (14).

9. Verfahren zum Wiegen von einzelnen, insbesondere pharmazeutischen, in einem Nest (12) angeordneten, Behältnissen (14) mit einem Bodenbereich (16) und einem Deckelbereich (18) umfassend die Schritte:
- Bereitstellen eines Nestes (12) mit mindestens einem darin angeordneten Behältnis (14);
- Aufnehmen des Bodenbereichs (16) eines zu wiegenden Behältnisses (14) in einer Wiegeaufnahme (22) einer Wiegeeinrichtung (20), um dieses mittels der Wiegeeinrichtung (20) zu wiegen;
- Vollständiges Herausheben des zu wiegenden Behältnisses (14) aus dem Nest (12), indem die Wiegeaufnahme (22)und/oder das Nest (12) entlang der Schwerkraftrichtung (30) relativ zueinander bewegt werden;
- Wiegen des aus dem Nest (12) vollständig herausgehobenen Behältnisses (14) mittels der Wiegeeinrichtung (20);
- Aufnehmen des Deckelbereichs (18) des zu wiegenden Behältnisses (14) in einer Zentrieraufnahme (26), um dieses, insbesondere in Bezug auf die Wiegeaufnahme (22), zu zentrieren, wobei die Zentrieraufnahme (26) in Bezug auf die Schwerkraftrichtung (30) oberhalb der Wiegeaufnahme (22) und oberhalb des Nestes (12) angeordnet ist.

10. Verfahren nach Anspruch 9, **dadurch gekennzeichnet, dass** das Verfahren den Schritt umfasst:
- Aufbringen einer Kraft auf das gewogene Behältnis (14), um dieses wieder in das Nest (12) zurückzuführen.

11. Verfahren nach Anspruch 9 oder 10, **dadurch gekennzeichnet, dass** das Verfahren die Schritte umfasst:
- Ermitteln nach dem Wiegen eines Behältnisses (14), ob es sich bei dem gewogenen Behältnis (14) um ein Ausschuss Behältnis (14) handelt;
- Entfernen des als Ausschuss Behältnis (14) identifizierten Behältnisses (14) aus der Wiegeaufnahme (22), so dass ein als Ausschuss Behältnis (14) identifiziertes Behältnis (14) nicht wieder in das Nest (12) zurückgeführt wird.

12. Verfahren nach einem der Ansprüche 9 bis 11, **dadurch gekennzeichnet, dass** das Verfahren den Schritt umfasst:
- Befüllen und/oder Verschließen eines Behältnisses (14), dessen Bodenbereich (16) in der Wiegeaufnahme (22) aufgenommen ist.

13. Verfahren nach einem der Ansprüche 9 bis 11, **dadurch gekennzeichnet, dass** zur Durchführung des Verfahrens eine Vorrichtung (10) nach einem der Ansprüche 1 bis 7 oder ein Set nach Anspruch 8 benutzt wird.

## Claims

1. Device (10) for weighing individual containers (14), in particular pharmaceutical containers, arranged in a nest (12), wherein the containers (14) are designed to have a base region (16) and a lid region (18) and the device (10) comprises:
- at least one weighing apparatus (20), wherein the weighing apparatus (20) has at least one load cell (19) for weighing the containers (14) and at least one weighing receptacle (22) for receiving the base region (16) of one of the containers (14),
- an arrangement unit (28) which is designed to arrange the nest (12) in the device (10) for the weighing process,
- wherein the device (10) is designed such that the weighing receptacle (22) and the arrangement unit (28) are designed to be movable relative to one another in order to be able to move a container (14) arranged in the nest (12), which is arranged in the arrangement unit (28), completely out of the nest (12), wherein the device (10) has at least one centering apparatus (24) for centering the container (14) to be weighed by means of the weighing apparatus (20), in particular with respect to the weighing receptacle (22), wherein the centering apparatus (24) has a centering receptacle (26) for receiving the lid region (18) of the container (14) to be weighed by means of the weighing apparatus (20), wherein the arrangement unit (28) is designed to place the nest (12) between the weighing apparatus (20) and the centering apparatus (24), in particular between the weighing receptacle (22) and the centering receptacle (26), for the weighing process, wherein the arrangement unit (28), the weighing receptacle (22) and/or the centering receptacle (26) are designed to be movable in the direction of gravity (30).

2. Device (10) according to claim 1, **characterized in that** the weighing receptacle (22) and/or the centering receptacle (26) are designed to be exchangeable, in particular without tools.

3. Device (10) according to the preceding claim, **characterized in that** the device (10) comprises a handling apparatus (32) for changing the weighing receptacle (22) and/or the centering receptacle (26).

4. Device (10) according to any of the preceding claims,
**characterized in that** the centering receptacle (26) has at least one projection (34), in particular four projections (26), for applying a force to the container (14) to be weighed, in particular in the direction of gravity (30), in order to return the container (14) to the nest (12).

5. Device (10) according to any of the preceding claims,
**characterized in that** the centering receptacle (26) is designed as a centering ring.

6. Device (10) according to any of the preceding claims,
**characterized in that** the device (10) has a gripping apparatus, the gripping apparatus being designed to remove a container (14) from the weighing apparatus (20), in particular from the weighing receptacle (22), after weighing.

7. Device (10) according to any of the preceding claims,
**characterized in that** the device (10) comprises a filling and/or closing apparatus (36) which is designed to fill and/or close a container (14), the base region (16) of which is received in the weighing receptacle (22).

8. Set comprising a device (10) according to any of the preceding claims, at least one nest (12) and at least one container (14), in particular a pharmaceutical container, arranged in the nest (12).

9. Method for weighing individual containers (14), in particular pharmaceutical containers, arranged in a nest (12), the containers having a base region (16) and a lid region (18), the method comprising the steps of:
- providing a nest (12) with at least one container (14) arranged therein;
- receiving the base region (16) of a container (14) to be weighed in a weighing receptacle (22) of a weighing apparatus (20) in order to weigh said container by means of the weighing apparatus (20);
- completely lifting the container (14) to be weighed out of the nest (12) by moving the weighing receptacle (22) and/or the nest (12) relative to one another in the direction of gravity (30);
- weighing the container (14) completely lifted out of the nest (12) by means of the weighing apparatus (20);
- receiving the lid region (18) of the container (14) to be weighed in a centering receptacle (26) in order to center said container, in particular with respect to the weighing receptacle (22), wherein the centering receptacle (26) is arranged above the weighing receptacle (22) and above the nest (12) with respect to the direction of gravity (30).

10. Method according to claim 9, **characterized in that** the method comprises the step of:
- applying a force to the weighed container (14) in order to return it to the nest (12).

11. Method according to either claim 9 or claim 10, **characterized in that** the method comprises the steps of:
- determining, after weighing a container (14), whether the weighed container (14) is a reject container (14);
- removing the container (14) identified as a reject container (14) from the weighing receptacle (22) so that a container (14) identified as a reject container (14) is not returned to the nest (12).

12. Method according to any of claims 9 to 11, **characterized in that** the method comprises the step of:
- filling and/or closing a container (14), the base region (16) of which is received in the weighing receptacle (22).

13. Method according to any of claims 9 to 11, **characterized in that** in order to carry out the method, a device (10) according to any of claims 1 to 7 or a set according to claim 8 is used.

## Revendications

1. Dispositif (10) pour le pesage de contenants (14) individuels, en particulier pharmaceutiques, disposés dans une emboîture (12), les contenants (14) étant réalisés avec une région de fond (16) et une région de couvercle (18) et le dispositif (10) comprenant :
- au moins un appareil de pesage (20), l'appareil de pesage (20) présentant au moins une cellule de pesage (19) pour le pesage des contenants (14) et au moins un logement de pesage (22) pour le logement de la région de fond (16) de l'un des contenants (14),
- une unité de disposition (28) qui est conçue pour disposer l'emboîture (12) dans le dispositif (10) pour l'opération de pesage,
- le dispositif (10) étant conçu de telle sorte que le logement de pesage (22) et l'unité de disposition (28) sont conçus de manière mobile l'un par rapport à l'autre, afin de pouvoir déplacer complètement hors de l'emboîture (12) un contenant (14) qui est disposé dans l'emboîture (12), laquelle est disposée dans l'unité de disposition (28), le dispositif (10) présentant au moins un appareil de centrage (24) pour le centrage du contenant (14) à peser à l'aide de l'appareil de pesage (20), en particulier par rapport au logement de pesage (22), l'appareil de centrage (24) présentant un logement de centrage (26) pour le logement de la région de couvercle (18) du contenant (14) à peser à l'aide de l'appareil de pesage (20), l'unité de disposition (28) étant conçue pour placer l'emboîture (12) pour l'opération de pesage entre l'appareil de pesage (20) et l'appareil de centrage (24), en particulier entre le logement de pesage (22) et le logement de centrage (26), l'unité de disposition (28), le logement de pesage (22) et/ou le logement de centrage (26) étant réalisés de manière mobile le long de la direction de la gravité (30).

2. Dispositif (10) selon la revendication 1, **caractérisé en ce que** le logement de pesage (22) et/ou le logement de centrage (26) sont réalisés de manière à pouvoir être changés, en particulier sans outil.

3. Dispositif (10) selon la revendication précédente, **caractérisé en ce que** le dispositif (10) comprend un appareil de manipulation (32) pour le changement du logement de pesage (22) et/ou du logement de centrage (26).

4. Dispositif (10) selon l'une des revendications précédentes,
**caractérisé en ce que** le logement de centrage (26) présente au moins une nervure (34), en particulier quatre nervures (26), pour l'application d'une force sur le contenant (14) à peser, en particulier dans la direction de la gravité (30), afin de ramener le contenant (14) dans l'emboîture (12).

5. Dispositif (10) selon l'une des revendications précédentes,
**caractérisé en ce que** le logement de centrage (26) est réalisé sous forme de bague de centrage.

6. Dispositif (10) selon l'une des revendications précédentes,
**caractérisé en ce que** le dispositif (10) présente un appareil de préhension, l'appareil de préhension étant conçu pour enlever un contenant (14) de l'appareil de pesage (20), en particulier du logement de pesage (22), après le pesage.

7. Dispositif (10) selon l'une des revendications précédentes,
**caractérisé en ce que** le dispositif (10) comprend un appareil de remplissage et/ou de fermeture (36) qui est conçu pour remplir et/ou pour fermer un contenant (14) dont la région de fond (16) est logée dans le logement de pesage (22).

8. Ensemble comprenant un dispositif (10) selon l'une des revendications précédentes, au moins une emboîture (12) et au moins un contenant (14), en particulier pharmaceutique, disposé dans l'emboîture (12).

9. Procédé pour le pesage de contenants (14) individuels, en particulier pharmaceutiques, disposés dans une emboîture (12), comportant une région de fond (16) et une région de couvercle (18), comprenant les étapes consistant à :
- fournir une emboîture (12) comportant au moins un contenant (14) disposé dans celle-ci ;
- loger la région de fond (16) d'un contenant (14) à peser dans un logement de pesage (22) d'un appareil de pesage (20) afin de peser celui-ci à l'aide de l'appareil de pesage (20) ;
- soulever complètement le contenant (14) à peser hors de l'emboîture (12) par le fait que le logement de pesage (22) et/ou l'emboîture (12) sont déplacés l'un par rapport à l'autre le long de la direction de la gravité (30) ;
- peser le contenant (14) soulevé complètement hors de l'emboîture (12) à l'aide de l'appareil de pesage (20) ;
- loger la région de couvercle (18) du contenant (14) à peser dans un logement de centrage (26) afin de centrer celui-ci, en particulier par rapport au logement de pesage (22), le logement de centrage (26) étant disposé au-dessus du logement de pesage (22) et au-dessus de l'emboîture (12) par rapport à la direction de la gravité (30).

10. Procédé selon la revendication 9, **caractérisé en ce que** le procédé comprend l'étape consistant à :
- appliquer une force sur le contenant (14) pesé afin de le ramener dans l'emboîture (12).

11. Procédé selon la revendication 9 ou 10, **caractérisé en ce que** le procédé comprend les étapes consistant à :
- déterminer, après le pesage d'un contenant (14), si le contenant (14) pesé est un contenant (14) de rebut ;
- enlever le contenant (14) identifié comme contenant (14) de rebut du logement de pesage (22), de sorte qu'un contenant (14) identifié comme contenant (14) de rebut n'est pas ramené dans l'emboîture (12).

12. Procédé selon l'une des revendications 9 à 11, **caractérisé en ce que** le procédé comprend l'étape consistant à :
- remplir et/ou fermer un contenant (14) dont la région de fond (16) est logée dans le logement de pesage (22).

13. Procédé selon l'une des revendications 9 à 11, **caractérisé en ce que,** pour la mise en œuvre du procédé, un dispositif (10) selon l'une des revendications 1 à 7 ou un ensemble selon la revendication 8 est utilisé.
